# DEMANDE DE BREVET EUROPEEN

(11) **EP 3 760 431 A1**
(43) Date de publication de la demande: **06.01.2021**
(21) Numéro de dépôt: 20181790.5
(22) Date de dépôt: 23.06.2020
(51) Int. Cl.: B32B 5/14, B32B 5/18, B32B 7/12, B32B 27/06, B32B 27/08, B32B 27/16, B32B 27/20, B32B 27/22, B32B 27/30

(54) **STRUCTURE MULTICOUCHE POUR LA REALISATION D'UN REVETEMENT DE SOL, A PROPRIETES D'ISOLATION ACOUSTIQUE**

(30) Priorité: 01.07.2019 FR 1907276
(71) Demandeur: GERFLOR, 69100 Villeurbanne (FR)
(72) Inventeur: CHABAN, Nicolas, 26130 SAINT RESTITUT (FR)
(74) Mandataire: Cabinet Laurent & Charras

(57) **Abrégé**

L'invention concerne une structure multicouche (1) pour la réalisation d'un revêtement de sol ou mur, la structure comprenant au moins une couche d'envers (2) en mousse de polyoléfine réticulée conférant des propriétés d'isolation acoustique à la structure, la couche d'envers (2) présentant une face inférieure destinée à être collée sur le sol ou mur, et une face supérieure collée avec une couche supérieure (3) réalisée à partir d'une matière plastique, de linoléum ou de caoutchouc.

Selon l'invention, au moins une des faces de la couche d'envers (2) présente une tension superficielle supérieure ou égale à 40 mN/m.

## Description

### DOMAINE TECHNIQUE

La présente invention concerne le secteur technique des revêtements de sols ou murs, et concerne plus particulièrement une structure multicouche pour la réalisation d'un revêtement de sol ou mur présentant des propriétés d'isolation acoustique.

La structure selon l'invention concerne les revêtements de sol en pose collée et présente une forme de panneau, de dalle ou de lame, et comprend au moins une couche réalisée à partir d'une matière plastique, de linoléum ou de caoutchouc.

La présente invention concerne également un procédé de fabrication d'une telle structure multicouche.

### ART ANTERIEUR

Il est bien connu de l'état de la technique de réaliser des structures multicouches pour la réalisation d'un revêtement de sol ou mur, présentant des propriétés d'isolation acoustiques.

En effet, la pollution sonore est devenue une problématique à fort enjeu sociétal. De nombreux acteurs du marché du revêtement de sol proposent des structures multicouches comprenant des couches d'envers et d'isolation acoustique intégrées à la structure multicouche, ou bien rapportées, par exemple en rouleau. Les couches d'envers sont notamment réalisées à partir de mousses de polyéthylène réticulé et offrent un ratio atténuation acoustique / résistance au poinçonnement très satisfaisant.

Ce type de structures multicouches, par exemple sous forme de dalles ou de lames, est majoritairement collé au sol.

Cela étant, la problématique majeure de ce type de structures réside dans la difficulté à les coller. En effet, une mousse de polyéthylène se colle très difficilement sur une couche d'envers réalisée à partir de PVC, mais également difficilement sur une dalle béton ou fibrociment ou en recouvrement d'un revêtement de sol réalisé à partir de PVC.

De ce qui précède, une structure multicouche de l'art antérieur comprend généralement :
- une couche d'usure, transparente à la lumière, et éventuellement réalisée à partir de PVC ;
- un film décor ;
- au moins une couche intermédiaire réalisée à partir de PVC, éventuellement plastifiée et chargée en charges minérales ;
- une couche d'envers acoustique en mousse de polyéthylène réticulé, collée en envers de la couche intermédiaire et destinée à être collée sur le sol.

Cependant, comme indiqué, le collage entre la couche intermédiaire en PVC et la couche de mousse de polyéthylène, ou le collage de la face inférieure de la couche de mousse sur une dalle béton ou fibrociment ou en recouvrement d'un revêtement de sol existant réalisé à partir de PVC, est relativement difficile.

En effet, les colles acryliques classiques ne permettent pas de coller efficacement la mousse de polyéthylène sur du PVC ou sur du béton ou fibrociment.

Il en résulte que la résistance à un test d'arrachage de la couche d'envers collée sur une couche intermédiaire en PVC ou sur du béton, est insuffisante avec une colle acrylique.

Pour résoudre ce problème, il est connu de mettre en œuvre des structures multicouches utilisant des fixateurs, ou poissants, supportés par un film double face pour lier la couche d'envers en mousse de polyéthylène à la couche intermédiaire en PVC et éventuellement au béton, au fibrociment ou à un revêtement de sol PVC en recouvrement.

Les colles alternatives, autre que les colles acryliques, par exemple les colles à base de polyuréthane, permettent d'atteindre de bonnes tenues à la délamination, mais sont plus onéreuses et complexifient la méthode de pose pour le solier. Notamment, le comportement de ce type de colle, à savoir le temps d'ouverture de la colle, le tack, etc., est trop différent de celui d'une colle acrylique couramment utilisée, ce qui n'est donc pas souhaitable.

### EXPOSE DE L'INVENTION

L'un des buts de l'invention est donc de remédier aux inconvénients précités en proposant une structure multicouche pour la réalisation d'un revêtement de sol ou mur qui présente une couche d'envers d'isolation acoustique en mousse de polyoléfine réticulée, dont le collage avec une colle acrylique à une couche supérieure réalisée à partir de polychlorure de vinyle ou en recouvrement d'un revêtement de sol dont la surface est réalisée à partir de polychlorure de vinyle est optimal, notamment pour résister aux tests d'arrachage en vigueur.

Un autre objectif de l'invention est de fournir une telle structure multicouche, présentant de bonnes valeurs de résistance au poinçonnement.

A cet effet, il a été mis au point une structure multicouche pour la réalisation d'un revêtement de sol ou mur, laquelle comprend au moins une couche d'envers en mousse de polyoléfine réticulée, par exemple de polyéthylène réticulé, conférant des propriétés d'isolation acoustique à ladite structure, la couche d'envers présentant une face inférieure destinée à être collée sur le sol ou mur, et une face supérieure collée avec une couche supérieure comprenant au moins une couche d'usure. De préférence, la couche supérieure est réalisée à partir d'une matière plastique, de préférence thermoplastique, ou de linoléum ou de caoutchouc. De façon plus préférentielle, la couche supérieure est réalisée à partir de polychlorure de vinyle.

Selon l'invention, au moins une des faces de la couche d'envers présente une tension superficielle supérieure ou égale à 40 mN/m, contrairement à l'art antérieur, où la tension superficielle est d'environ 35 mN/m.

Le fait que la mousse de polyoléfine soit réticulée, par exemple par irradiation, permet la création de liaisons chimiques structurales. Ceci permet d'améliorer la résistance à la température, ainsi que la résistance mécanique à la compression, ou encore à la résistance à l'humidité. En particulier, une mousse en polyéthylène réticulé permet d'obtenir un bon compromis entre la résistance mécanique à la compression, notamment pour résister au trafic subit par le revêtement de sol, et les propriétés acoustiques du revêtement de sol.

Le fait que la tension superficielle de l'une des faces de la couche d'envers soit supérieure ou égale à 40 mN/m permet d'améliorer le collage, notamment avec des colles à base de polyuréthane, par exemple du type bien connu sous l'expression anglaise « *hot melt* », avec des colles bien connues sous l'acronyme « *PSA* » de l'anglais *«Pressure Sensitive Adhesives* », mais surtout avec des colles à base d'acrylique.

Avantageusement, et pour optimiser le collage de la face inférieure de la couche d'envers sur une dalle béton ou fibrociment ou en recouvrement sur un revêtement de sol réalisé à partir de PVC, ladite face inférieure présente une tension superficielle supérieure ou égale à 40 mN/m.

Avantageusement, et pour optimiser le collage de la face supérieure de la couche d'envers à une couche supérieure réalisée à partir de PVC, ladite face supérieure présente une tension superficielle supérieure ou égale à 40 mN/m.

Selon une forme de réalisation particulière, et afin d'obtenir la tension superficielle désirée, la face supérieure et/ou la face inférieure, de la couche d'envers ont subi un traitement de surface par fluoration. En d'autres termes, cela signifie que la surface de la face supérieure, et éventuellement inférieure, de la couche d'envers, par exemple les 10 premiers nanomètres d'épaisseur au départ de ladite face traitée, comprennent des atomes de fluor, par exemple dans un taux supérieur à 3%, préférentiellement supérieur à 5 %. Un taux de fluor supérieur à 3%, permet d'atteindre des valeurs de délamination supérieures à environ 0,6 daN/cm. Un taux de fluor supérieur à 5%, permet d'atteindre des valeurs de délamination supérieures à environ 0,8 daN/cm. La méthode de mesure de la délamination est définie par la norme NF EN ISO 24345.

Lors du traitement de surface par fluoration, la réactivité du gaz fluor sur la surface de la face traitée de la couche d'envers entraîne une substitution d'atomes d'hydrogène par des atomes de fluor, optimisant ainsi l'adhésion de la colle.

Afin d'améliorer les propriétés d'isolation acoustique et de conserver de bonnes valeurs de résistance au poinçonnement, la couche d'envers présente une épaisseur comprise entre 0,5 et 2 mm, et de préférence égale à 1 mm.

Toujours dans le même but d'améliorer les propriétés d'isolation acoustique et de résistance au poinçonnement, la couche d'envers présente une densité comprise entre 70 et 120 kg/m³ voire entre 80 et 120 kg/m³, et de préférence égale à 95 kg/m³.

Partant de ce concept, la structure multicouche peut présenter plusieurs configurations.

La structure multicouche comprend une couche d'usure, éventuellement réalisée à base de polychlorure de vinyle. La couche d'envers peut être directement collée à cette couche d'usure.

Selon une autre forme de réalisation, la couche d'usure est transparente à la lumière visible et liée à un film décor.

Selon encore une autre forme de réalisation, la structure multicouche comprend une ou plusieurs couches intermédiaires réalisées à partir de polychlorure de vinyle, d'une part liée à la couche d'usure, qui intègre ou non un film décor, et d'autre part collée à la couche d'envers.

Selon une forme de réalisation particulière, la couche intermédiaire est réalisée à partir de polychlorure de vinyle, et est éventuellement plastifiée, et comprend éventuellement des charges minérales.

La couche supérieure et/ou la couche d'usure et/ou les couches intermédiaires sont généralement réalisées à partir d'une matière plastique, de préférence thermoplastique, ou de linoléum ou de caoutchouc.

De façon particulière, des matériaux pouvant être utilisés en fonction des propriétés mécaniques recherchées pour la réalisation de la couche supérieure et/ou de la couche d'usure et/ou des couches intermédiaires sont notamment les polyoléfines, les copolyesters thermoplastiques, les polyamides thermoplastiques, le polychlorure de vinyle (PVC), le poly(butyral vinylique) (PVB), l'acide polylactique (PLA), le polyéthylène téréphtalate (PET), le polyméthacrylate de méthyle (PMMA), le polypropylène (PP), le polyéthylène glycol (PETG), les polyuréthanes thermoplastiques (TPU), le poly(éthylène-acétate de vinyle) (EVA), le poly(éthylène-acrylate de méthyle) (EMA), le poly(éthylène-acrylate de butyle) (EBA), le poly(éthylène-acrylate d'éthyle) (EEA), seuls ou en mélanges.

La présente invention concerne également un procédé de fabrication d'une structure multicouche pour la réalisation d'un revêtement de sol ou mur, la structure comprenant une couche d'envers en mousse de polyoléfine réticulée, par exemple du polyéthylène réticulé, conférant des propriétés d'isolation acoustique à la structure multicouche. La couche d'envers présente une face inférieure destinée à être collée sur le sol ou mur, et une face supérieure collée avec une couche supérieure réalisée à partir de polychlorure de vinyle.

Selon l'invention, le procédé consiste en ce que, avant collage de la face supérieure de la couche d'envers avec la couche supérieure, ladite face supérieure subi un traitement augmentant sa tension superficielle à un niveau supérieur ou égal à 40 mN/m.

De la même manière, et selon une forme de réalisation particulière, notamment lorsqu'il s'agit de coller la structure multicouche sur un revêtement de sol PVC existant, du béton ou du fibrociment, la face inférieure de la couche d'envers subi, avant collage, un traitement de surface augmentant sa tension superficielle à un niveau supérieur ou égal à 40 mN/m.

Selon des formes de réalisation particulières, le traitement consiste en un traitement de surface par fluoration, tel qu'une oxyfluoration ou une perfluoration, ou bien consiste en un traitement Corona.

### DESCRIPTION SOMMAIRE DES FIGURES

D'autres avantages et caractéristiques ressortiront mieux de la description qui va suivre, donnée à titre d'exemple non limitatif, en référence aux figures annexées dans lesquelles :
[Fig. 1] la figure 1 est une représentation schématique, en coupe, d'une première forme de réalisation d'une structure multicouche selon l'invention ;
[Fig. 2] la figure 2 est une représentation schématique similaire à celle de la figure 1, illustrant un deuxième mode de réalisation de l'invention ;
[Fig. 3] la figure 3 est une représentation schématique similaire à celle de la figure 1, illustrant un troisième mode de réalisation de l'invention.

### DESCRIPTION DETAILLEE DE L'INVENTION

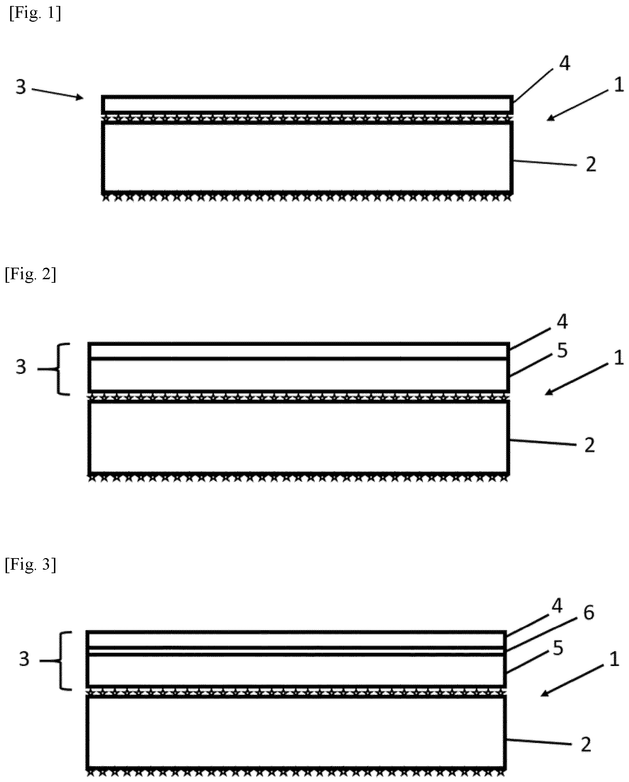

En référence aux figures 1 à 3, l'invention concerne une structure multicouche (1) pour la réalisation d'un revêtement de sol ou mur, présentant des propriétés d'isolation acoustique.

À cet effet, et d'une manière connue, la structure multicouche (1) comprend au moins une couche d'envers (2) en mousse de polyoléfine réticulée conférant des propriétés d'isolation acoustique à la structure, laquelle comprend une face inférieure destinée à être collée sur le sol ou sur le mur.

La couche d'envers (2) en mousse de polyoléfine réticulée, par exemple en particulier en mousse de polyéthylène réticulé, présente de préférence une épaisseur comprise entre 0,5 et 2 mm, par exemple 1 mm, et une densité comprise entre 70 kg/m³ et 120 voire entre 80 et 120 kg/m³, par exemple égale à 95 kg/m³.

De ce qui précède, la couche d'envers (2), associée à une couche supérieure (3) comprenant une couche d'usure (4) réalisée à partir d'une matière plastique, de linoléum ou de caoutchouc permet à la structure multicouche (1) de présenter de bonnes performances en termes d'isolation acoustique et de résistance au poinçonnement.

La couche supérieure (3) présente de préférence une épaisseur comprise entre 1 et 6 mm. De façon plus préférentielle, la couche supérieure (3) présente une épaisseur comprise entre 1 et 3 mm afin de présenter une bonne résistance à l'usure tout en limitant le coût de fabrication de la structure multicouche (1).

D'une manière connue, la face supérieure de la couche d'envers (2) est collée avec la couche supérieure (3) réalisée à partir de polychlorure de vinyle.

Selon l'invention, et afin de faciliter l'opération de collage, avec une colle à base d'acrylique par exemple, et notamment afin de garantir une tenue optimale au test d'arrachage en vigueur, ladite face supérieure de la couche d'envers (2) présente une tension superficielle supérieure ou égale à 40 mN/m. La tension superficielle est définie selon la norme ISO 8296-2003.

De la même manière, pour faciliter le collage de la face inférieure de la couche d'envers (2), notamment lorsqu'il s'agit de la coller sur du béton ou du fibrociment, ladite face inférieure de la couche d'envers (2) présente aussi une tension superficielle supérieure ou égale à 40 mN/m.

Afin d'obtenir cette valeur de tension superficielle, plusieurs solutions sont possibles.

Selon une première forme de réalisation, un traitement de surface est réalisé sur la face supérieure, éventuellement sur la face inférieure, de la couche d'envers (2), augmentant leur tension superficielle à un niveau supérieur ou égal à 40 mN/m.

Par exemple, ce traitement de surface peut consister en un traitement de surface par fluoration, tel qu'une oxyfluoration, ou une perfluoration.

La réalisation d'un tel procédé de traitement de surface par fluoration est visible sur la structure multicouche (1) finale puisque, l'épaisseur de la couche d'envers (2), et par exemple les dix premiers nanomètres d'épaisseur de la face traitée, comprennent des atomes de fluor, par exemple dans un taux supérieur à 3%, préférentiellement supérieur à 5 %.

Lors du procédé de fluoration, la réactivité du gaz fluor sur la surface de la mousse polyoléfine réticulée, ou plus précisément de la mousse de polyéthylène réticulé, entraîne la substitution d'atomes d'hydrogène par des atomes de fluor, améliorant ainsi l'adhésion de la colle, et notamment d'une colle à base d'acrylique.

Afin de vérifier le taux de fluor sur la face traitée, ladite face est par exemple analysée par spectroscopie photo-électronique par rayons X.

Les conditions d'analyse sont les suivantes :
XPS sur appareil NOVA KRATOS
CONDITIONS D'ANALYSES : Source : Al Kα monochromatisée. Avec compensation des charges. 150 Watts pour les spectres généraux et 225 Watts pour les spectres en haute résolution. Aire analysée : 300 µm x 700 µm. Angle de détection : normal (θ = 0°). Profondeur analysée inférieure à 10 nm en détection normale.

Dans ces conditions, l'analyse a permis de détecter, dans les 10 premiers nanomètres de la face traitée, un taux d'atomes de fluor égal à 8,2 %.

Ce taux de fluor de 8,2 % permet à la face traitée de la couche d'envers (2) de présenter une tension superficielle supérieure à 40 mN/m, et notamment une tension superficielle de 52 mN/m. La méthode de mesure de la tension superficielle est définie selon la norme ISO 8296-2003.

Afin de valider l'adhésion de la couche d'envers (2), il a été réalisé des tests avec des faces supérieure et inférieure de la couche d'envers (2) traitées par fluoration, et présentant une tension superficielle de 52 mN/m.

Les tests réalisés consistent en des mesures d'arrachage de la couche d'envers (2) collée, d'une part, sur une couche supérieure (3) de PVC plastifié et chargée en charges minérales, et collée, d'autre part, sur un sol en fibrociment, en comparaison avec une couche d'envers (2) collée dans les mêmes conditions, mais non traitée au fluor, c'est-à-dire présentant une tension superficielle d'environ 35 mN/m.

Le test d'arrachage de l'ensemble de la structure multicouche (1) sur le support fibrociment donne une valeur de force moyenne de 0,1 daN/cm pour la structure comprenant une couche d'envers (2) non traitée.

Le test réalisé avec une structure multicouche (1) comprenant une couche d'envers (2) dont les faces inférieure et supérieure sont traitées donne une valeur de force moyenne de 1,3 daN/cm.

Par conséquent, il apparaît que la structure multicouche (1) comprenant une couche d'envers (2) traitée selon l'invention présente une bonne adhésion, en notant que la valeur minimale pour la force d'arrachage exigée par les normes en vigueur doit être de 0,6 daN/cm.

Ainsi, la présente invention permet de faciliter le collage de la couche d'envers (2) sur une couche supérieure (3) de PVC, notamment au moyen d'une colle acrylique classique, tout en garantissant un collage optimal, ainsi qu'une facilité de pose de l'ensemble de la structure multicouche (1) car le collage devient possible sur une dalle béton ou fibrociment, sans changer de procédé ni de produit habituellement utilisés par les soliers.

Pour obtenir une tension superficielle supérieure ou égale à 40 mN/m, une autre solution consiste à faire subir un traitement Corona à la face supérieure de la couche d'envers, et éventuellement à la face inférieure. Le traitement Corona consiste en l'émission d'une décharge électrique à haute fréquence vers la surface traitée. Il permet d'obtenir une très forte oxydation de la surface et de modifier sa mouillabilité afin de faciliter l'accroche de la colle, notamment à base d'acrylique.

Cependant, l'effet du traitement Corona a tendance à se dégrader en quelques semaines. Le traitement Corona est alors plutôt utilisé pour coller la face supérieure de la couche d'envers (2) à la couche supérieure (3).

Plusieurs formes de réalisation peuvent être envisagées pour la structure multicouche (1), en fonction de l'application désirée.

Par exemple, et en référence à la figure 1, la couche supérieure (3) peut notamment être constituée par une unique couche d'usure (4) réalisée à partir de polychlorure de vinyle, éventuellement plastifiée, et éventuellement chargée en charges minérales.

Selon une forme de réalisation, notamment illustrée la figure 2, la couche supérieure (3) peut être constituée d'une couche d'usure (4) liée à une couche intermédiaire (5), elle-même réalisée à partir de PVC, éventuellement plastifiée, éventuellement chargée en charges minérales.

Selon une autre forme de réalisation, notamment illustrée à la figure 3, la couche supérieure (3) est constituée d'une couche d'usure (4), liée à un film décor (6) et à une couche intermédiaire (5), elle-même réalisée à partir de polychlorure de vinyle, éventuellement plastifiée, éventuellement chargée en charges minérales. Selon cette forme de réalisation, la couche d'usure (4) présente préférentiellement une épaisseur comprise entre 0,3 et 1 mm. Ceci permet d'adapter la couche d'usure en fonction de la résistance au trafic recherché pour la plupart des applications, tout en limitant le coût de fabrication de la structure multicouche (1).

L'invention réside dans le fait que la face supérieure de la couche d'envers (2), destinée à être en contact avec du PVC, présente une tension superficielle supérieure ou égale à 40 mN/m et, si la couche d'envers (2) est destinée à être collée sur du béton ou du fibrociment, ou toute autre matière sur laquelle la colle à base d'acrylique présente une adhésion médiocre, la face inférieure de la couche d'envers (2) comprend aussi une tension superficielle supérieure ou égale à 40 mN/m.

Il ressort de ce qui précède que l'invention fournit bien une structure multicouche (1) pour la réalisation de revêtements de sol, qui présente des propriétés d'isolation acoustique, tout en permettant d'optimiser le collage avec une colle acrylique d'une mousse de polyoléfine réticulée sur du PVC, du béton ou du fibrociment, en permettant de résister aux tests d'arrachage en vigueur, et en présentant une bonne résistance au poinçonnement.

## Revendications

1. Structure multicouche (1) pour la réalisation d'un revêtement de sol ou mur, la structure comprenant au moins une couche d'envers (2) en mousse de polyoléfine réticulée conférant des propriétés d'isolation acoustique à la structure, la couche d'envers (2) présentant une face inférieure destinée à être collée sur le sol ou mur, et une face supérieure collée avec une couche supérieure (3) réalisée à partir d'une matière plastique, de linoléum ou de caoutchouc, ***caractérisée* en ce qu'**au moins une des faces de la couche d'envers (2) présente une tension superficielle supérieure ou égale à 40 mN/m.

2. Structure selon la revendication 1, ***caractérisée* en ce que** la face inférieure de la couche d'envers (2) présente une tension superficielle supérieure ou égale à 40 mN/m.

3. Structure selon l'une des revendications précédentes, ***caractérisée* en ce que** la face supérieure de la couche d'envers (2) présente une tension superficielle supérieure ou égale à 40 mN/m.

4. Structure selon l'une des revendications précédentes, ***caractérisée* en ce que** la face supérieure et/ou la face inférieure ont subi un traitement de surface par fluoration.

5. Structure selon la revendication 1, ***caractérisée* en ce que** la couche d'envers (2) présente une épaisseur comprise entre 0,5 et 2 mm, et de préférence égale à 1 mm.

6. Structure selon la revendication 1, ***caractérisée* en ce que** la couche d'envers (2) présente une densité comprise entre 70 et 120 kg/m³, et de préférence égale à 95 kg/m³.

7. Structure selon la revendication 1, ***caractérisée* en ce que** la couche supérieure (3) est réalisée à partir de polychlorure de vinyle

8. Structure selon la revendication 1, ***caractérisée* en ce qu'**elle comprend une couche d'usure (4) transparente à la lumière visible et liée à un film décor (6).

9. Structure selon l'une des revendications 7 et 8, ***caractérisée* en ce qu'**elle comprend une couche intermédiaire (5) réalisée à partir de polychlorure de vinyle, collée à la couche d'envers (2).

10. Structure selon la revendication 9, ***caractérisée* en ce que** la couche intermédiaire (5) réalisée à partir de polychlorure de vinyle est plastifiée et comprend des charges minérales.

11. Procédé de fabrication d'une structure multicouche (1) pour la réalisation d'un revêtement de sol ou mur, la structure multicouche (1) comprenant une couche d'envers (2) en mousse de polyoléfine réticulée conférant des propriétés d'isolation acoustique à la structure, la couche d'envers (2) présentant une face inférieure destinée à être en collée sur le sol ou mur, et une face supérieure collée avec une couche supérieure (3) réalisée à partir de polychlorure de vinyle, ***caractérisé* en ce qu'**avant collage de la face supérieure de la couche d'envers (2) avec la couche supérieure (3), ladite face supérieure subi un traitement de surface augmentant sa tension superficielle à un niveau supérieur ou égal à 40 mN/m.

12. Procédé selon la revendication 11, ***caractérisé* en ce que** la face inférieure de la couche d'envers (2) subi aussi un traitement de surface augmentant sa tension superficielle à un niveau supérieur ou égal à 40 mN/m.

13. Procédé selon la revendication 11, ***caractérisé* en ce que** le traitement de surface consiste en un traitement de surface par fluoration.

14. Procédé selon la revendication 11, ***caractérisé* en ce que** le traitement de surface consiste en un traitement Corona.
